# EUROPEAN PATENT APPLICATION

(11) **EP 4 539 297 A1**
(43) Date of publication of application: **16.04.2025**
(21) Application number: 22945834.4
(22) Date of filing: 09.06.2022
(51) Int. Cl.: H02J 7/02, H01M 10/42

(54) **ENERGY STORAGE SYSTEM, AND ELECTRIC POWER CONTROL SYSTEM**

(71) Applicant: MITSUBISHI ELECTRIC CORPORATION, Chiyoda-ku Tokyo 100-8310 (JP)
(72) Inventor: SHIMAZU, Takayuki, Tokyo 100-8310 (JP); TAHATA, Kazuyori, Tokyo 100-8310 (JP); PAGE, Frederick, Tokyo 100-8310 (JP); TOMINAGA, Shinji, Tokyo 100-8310 (JP)
(74) Representative: Witte, Weller & Partner Patentanwälte mbB
(86) International application number: PCT/JP2022/023305
(87) International publication number: WO 2023/238332

(57) **Abstract**

An energy storage system (21) includes a pair of input and output terminals (29P, 29N) connected to an electric power converter (20), and a plurality of power storage units (2_1 to 2_n) connected in parallel between one (29P) of the pair of input and output terminals and the other one (29N) of the pair of input and output terminals. The power storage units (2_1 to 2_n) each include a power storage element group consisting of a plurality of power storage elements (4). Among the plurality of power storage units, when one power storage unit is replaced with a new power storage unit, the one power storage unit is replaced with the new power storage unit so that a difference in current flowing through the new power storage unit and remaining power storage units, excluding the one power storage unit, is reduced.

## Description

### TECHNICAL FIELD

The present disclosure relates to an energy storage system, and an electric power control system.

### BACKGROUND ART

In the facilities for stabilizing the frequency of an alternating-current (AC) system, the discharge energy of a large capacitor disposed on the direct current (DC) side of the AC system is converted into an AC power by a power converter and the AC power is emitted to the AC system. The AC power of the AC system, in contrast, is converted into a DC power by a power converter, and the DC power is absorbed into a large capacitor as charge energy. The large capacitor is, for example, an electrical double layer capacitor (EDLC), which is also referred to as a supercapacitor or ultracapacitor.

Even in a secondary battery power storage system referred to as a battery energy storage system (BESS), the same functionality as the above facilities can be implemented. Specifically, the discharge energy of a storage battery on the DC side is emitted to the AC system via a power converter, and the AC power of the AC system is absorbed into a storage battery as a charge energy via a power converter.

The stabilization of the frequency, load leveling, etc. of the power system can be expected by interconnecting the power storage device on the DC side to the AC system via a power converter and using the DC energy stored in the power storage device. As a system combining a power converter with, for example, a storage battery in such a way, for example, WO 2009/136641 (PTL 1) discloses a system stabilizing device which has a power converter capable of performing an inverting action and a converting or rectifying action, and a DC charging unit, such as an electric double layer capacitor or a lead storage battery.

### CITATION LIST

### PATENT LITERATURE

PTL 1: WO 2009/136641

### SUMMARY OF INVENTION

### TECHNICAL PROBLEM

For example, with an increase of renewable energy power supplies in recent years, there is a tendency to demand a large-output power conversion device. In order to implement a grid-forming control that enables supply of power to fluctuations in demand, a large-output power of an active power needs to be performed at a high speed. To implement a large-output power conversion device that can achieve this, a system configuration is considered in which a large-capacity energy storage system (ESS) is combined with a power conversion device. Typically, ESS having an increased capacity is implemented by parallel connection of power storage units which are configured of a large number of power storage elements connected in series.

The power storage element applied to the power storage unit have life characteristics. For example, the EDLC deteriorates by aging and with use conditions. As a result, the capacitance decreases and an equivalent series resistance (ESR) increases. Since the life characteristics of the power storage element depends on the current flowing through the power storage unit, if the currents flowing through the power storage units connected in parallel differ, the power storage units differ in degree of aging. Accordingly, the currents flowing through the power storage units are required to be as uniform as possible.

An object of a certain aspect of the present disclosure is to provide a technique that enables the currents flowing through the power storage units within the energy storage system to be as uniform as possible.

### SOLUTION TO PROBLEM

According to a certain embodiment, an energy storage system connected to an alternating-current power system via an electric power converter is provided. The energy storage system is configured to receive and store a direct-current power as an energy and output the energy as a direct-current power, the energy storage system. The energy storage system includes: a pair of input and output terminals connected to the electric power converter; and a plurality of power storage units which are connected in parallel between one of the pair of input and output terminals and the other one of the pair of input and output terminals. Each of the plurality of power storage units includes a power storage element group consisting of a plurality of power storage elements. Among the plurality of power storage units, when one power storage unit is replaced with a new power storage unit, the one power storage unit is replaced with the new power storage unit so that a difference in current flowing through the new power storage unit and remaining power storage units, excluding the one power storage unit, is reduced.

An electric power control system according to another embodiment includes the energy storage system described above, and a monitoring control device to monitor states of the plurality of power storage units. When the one power storage unit is malfunctioning, the monitoring control device shows guidance information for replacement of the one power storage unit with the new power storage unit.

According to still another embodiment, an energy storage system connected to an alternating-current power system via an electric power converter is provided. The energy storage system is configured to receive and store a direct-current power as an energy and output the energy as a direct-current power. The energy storage system includes: a pair of input and output terminals connected to the electric power converter; and a plurality of power storage units which are connected in parallel between one of the pair of input and output terminals and the other one of the pair of input and output terminals. Each of the plurality of power storage units includes a power storage element group consisting of a plurality of power storage elements and a correction resistance connected to the power storage element group. Resistance values of a plurality of correction resistances respectively included in the plurality of power storage units are set so that currents flowing through the plurality of power storage units are uniform.

According to still another embodiment, an energy storage system connected to an alternating-current power system via an electric power converter is provided. The energy storage system is configured to receive and store a direct-current power as an energy and output the energy as a direct-current power, the energy storage system. The energy storage system includes: a pair of input and output terminals connected to the electric power converter; and a plurality of power storage units which are connected in parallel between one of the pair of input and output terminals and the other one of the pair of input and output terminals. The plurality of power storage units are disposed at an equal electrical distance from the electric power converter.

According to still another embodiment, an energy storage system connected to an alternating-current power system via an electric power converter is provided. The energy storage system is configured to receive and store a direct-current power as an energy and output the energy as a direct-current power. The energy storage system includes: a pair of input and output terminals connected to the electric power converter; a plurality of power storage units which are connected in parallel between one of the pair of input and output terminals and the other one of the pair of input and output terminals; and switches for the plurality of power storage units, the switches each being disposed on a connection line for connecting, in parallel, a power storage unit and a power storage unit adjacent to the power storage unit, among the plurality of power storage units. The energy storage system is capable of adjusting an electrical distance from the electric power converter to each of the plurality of power storage units by changing open or closed states of the switches and the power storage unit that is directly connected to the electric power converter.

### ADVANTAGEOUS EFFECTS OF INVENTION

According to the present disclosure, the currents flowing through the power storage units within the energy storage system can be made as uniform as possible.

### BRIEF DESCRIPTION OF DRAWINGS

Fig. 1 is a block diagram showing a configuration of an electric power control system.
Fig. 2 is a block diagram showing an example of a basic configuration of an energy storage system.
Fig. 3 is a diagram illustrating one example of a user interface screen.
Fig. 4 is a diagram showing a configuration of an energy storage system according to Comparative Example.
Fig. 5 is a diagram showing a configuration of an energy storage system according to Embodiment 1.
Fig. 6 is a diagram showing a configuration of an energy storage system according to Variation 1 of Embodiment 1.
Fig. 7 is a diagram showing a configuration of an energy storage system according to Variation 3 of Embodiment 1.
Fig. 8 is a diagram showing a configuration of an energy storage system according to Embodiment 2.
Fig. 9 is a diagram showing a configuration of an energy storage system according to Embodiment 3.
Fig. 10 is a diagram showing a configuration of an energy storage system according to Embodiment 4.
Fig. 11 is a diagram showing a configuration of an energy storage system according to Embodiment 5.

### DESCRIPTION OF EMBODIMENTS

Hereinafter, embodiments are described, with reference to the accompanying drawings. In the following description, like reference signs refer to like parts. Their names and functionalities are also the same. Thus, detailed description thereof will not be repeated.

### [Underlying Configuration for Embodiments]

### <Configuration of Power Control System>

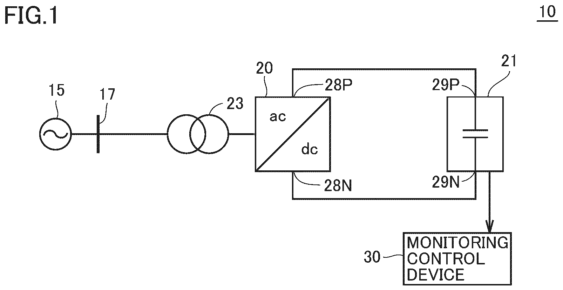

Fig. 1 is a block diagram showing a configuration of a power control system 10. In Fig. 1, two connecting terminals are disposed on the direct-current (DC) side of a power converter 20 that is configured as a self-commutated converter. The power converter 20 can perform bidirectional conversion of converting a DC power into a DC power having a different voltage. The power converter 20 may be of an isolated type or a non-isolated type, and its configuration is not specifically limited. Note that the alternating-current (AC) side of the power converter 20 is connected to a three-phase AC system, and three connecting terminals are therefore provided for u phase, v phase, and w phase. For ease of description, Fig. 1 shows only an AC terminal for one phase.

Referring to Fig. 1, the power control system 10 includes the power converter 20, an energy storage system (ESS) 21, a transformer 23, and a monitoring control device 30.

The energy storage system 21 is connected to the AC power system 15 via the electric power converter 20. Specifically, the energy storage system 21 is configured to store, as energy, the DC power input via a pair of input and output terminals (i.e., a positive terminal 29P and a negative terminal 29N), and output the stored energy as DC power via the pair of input and output terminals. The energy stored in the energy storage system 21 is exploited for the frequency stabilization and load leveling of the AC power system, and is further exploited as a reserve power. In the following description, the positive terminal 29P and the negative terminal 29N may be described as a "pair of input and output terminals 29."

The energy storage system 21 includes multiple power storage elements which are connected in series and in parallel between the positive terminal 29P and the negative terminal 29N. Each power storage element may be, for example, a large capacitor such as an electrical double layer capacitor (EDLC), or a storage battery. Fig. 1 symbolically shows a single power storage element.

The power converter 20 is connected between a point of interconnection 17 of the AC power system 15 and the pair of input and output terminals of the energy storage system 21. Specifically, the power converter 20 has a pair of DC terminals (i.e., a positive-side DC terminal 28P and a negative-side DC terminal 28N) connected to the pair of input and output terminals (i.e., the positive terminal 29P and the negative terminal 29N), respectively, of the energy storage system 21. Accordingly, the rated DC voltage of the power converter 20 and the rated voltage of the energy storage system 21 are equal. The AC terminal for a respective phase of the power converter 20 is connected to a power line for a corresponding phase of the AC power system 15.

The power converter 20 performs forward conversion of converting an AC current into a DC current, and inverse conversion of converting an DC current into an AC current. Specifically, the power converter 20 converts the AC power of the AC power system 15 into DC power and causes the energy storage system 21 to absorb the DC power as charge energy. Conversely, the power converter 20 converts the DC power of the energy storage system 21 into AC power and emits the AC power as discharge energy to the AC power system 15. For example, the electric power converter 20 may have a virtual synchronous generator control function simulating the behavior of a synchronous generator when connected to the power system.

The power converter 20 includes multiple self-turn-off semiconductor devices which are used as switching elements. For example, an insulated gate bipolar transistor (IGBT), a gate commutated turn-off (GCT) thyristor, etc. are used as the self-turn-off semiconductor device. The self-turn-off semiconductor device is connected in anti-parallel to a freewheeling diode. The power converter 20 may be a twolevel/three-level, furthermore, multi-level converter, a modular multilevel converter (MMC), a transformer multiplexing, a reactor parallel fashion, and a combination thereof.

The transformer 23 is connected between the AC power system 15 and the power converter 20. The transformer 23 steps up and outputs to the AC power system 15 the AC power output from the power converter 20. For ease of description, Fig. 1 denotes the transformer 23 as a single-phase transformer. However, delta-Y connection, delta-delta connection, or delta-delta-Y connection, etc. is used in the actual connection of a three-phase transformer. If the power converter 20 is capable of outputting a high voltage AC voltage, such as a modular multilevel converter, an interconnection reactor may be provided, instead of the transformer 23.

The monitoring control device 30 monitors power storage units, each consisting of multiple power storage elements, which are provided within the energy storage system 21. The monitoring control device 30 is capable of communications with each power storage unit. For example, the monitoring control device 30 receives the state information from each power storage unit, and displays the state of the power storage unit. If a power storage unit is malfunctioning (e.g., if the state information of the power storage unit indicates "fault"), the monitoring control device 30 shows guideline information for replacement of the power storage unit with a new power storage unit on a display.

Typically, the monitoring control device 30 is configured of a computer. For example, the monitoring control device 30 includes one or more processors, a random access memory (RAM), a read only memory (ROM), a hard disk, a communications interface, a display, and an input device, for example. Note that at least a portion of the monitoring control device 30 may be configured, using circuits such as a field programmable gate array (FPGA) and an application specific integrated circuit (ASIC), for example.

Note that the monitoring control device 30 may be configured as a control device (not shown) for controlling the operation of the electric power converter 20, or may be provided separately from the control device.

### <Configuration of Energy Storage System>

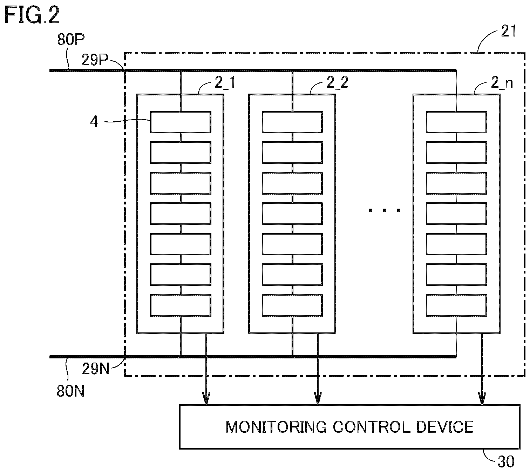

Fig. 2 is a block diagram showing an example of a basic configuration of the energy storage system. Referring to Fig. 2, the energy storage system 21 includes multiple power storage units 2_1, 2_2, to 2_n (hereinafter, also collectively referred to as a "power storage unit 2"), which are connected in parallel between the positive terminal 29P and the negative terminal 29N.

The positive terminal 29P and the negative terminal 29N of the power storage unit 2 are connected to a positive busbar 80P and a negative busbar 80N, respectively. Each power storage unit 2 includes a power storage element group configured of multiple power storage elements 4. The power storage elements 4 are connected in series. Each power storage unit 2 is capable of communications with the monitoring control device 30.

The monitoring control device 30 receives the state information from the power storage unit 2. For example, the state information having a value of "1" indicates that the power storage unit is in a healthy state, and the state information having a value of "0" indicates that the power storage unit is in a fault state. The monitoring control device 30 can determine whether each power storage unit 2 is in the healthy state or the fault state, based on the value of the state information. Note that if the monitoring control device 30 does not receive the state information from the power storage unit 2, the monitoring control device 30 may determine that the power storage unit 2 is in the fault state. The monitoring control device 30 shows a user interface screen for notifying a system operator of the state of each power storage unit 2 on an internal display.

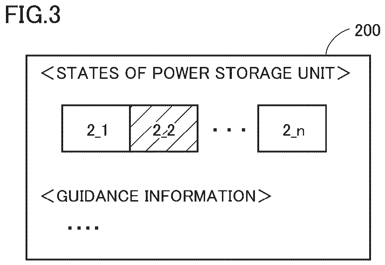

Fig. 3 is a diagram illustrating one example of the user interface screen. Referring to Fig. 3, the user interface screen 200 includes information indicating the state of each power storage unit, and the guidance information. The user interface screen 200 shows an example where a fault is occurring at the power storage unit 2_2. The guidance information shows an action to be taken by an operator to handle the fault.

Referring, again, to Fig. 2, a large number of power storage units 2 are connected in parallel to the energy storage system 21, which ensures a required capacity. If there is a difference in current flowing through the respective power storage units 2, in contrast, the power storage units 2 differ in degree of aging, which is operationally undesirable. In the following, in embodiments, a configuration will be described for making the currents flowing through the respective power storage units 2 as uniform as possible.

### Embodiment 1.

Here, assume that one of the power storage units 2 fails and needs to be replaced with a new power storage unit 2. In the following, for ease of description, a configuration will be described where the energy storage system 21 includes four power storage units 2. This approach is similar for the other embodiments.

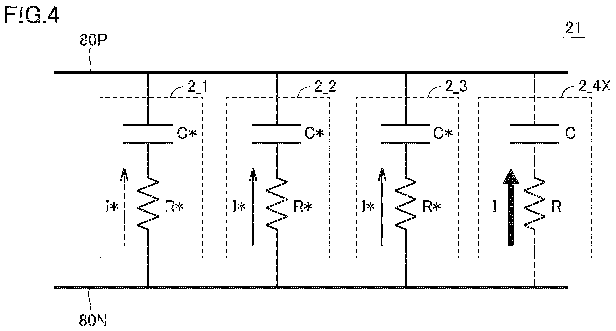

Fig. 4 is a diagram showing a configuration of an energy storage system 21 according to Comparative Example. Fig. 4 shows the energy storage system 21 after the fault power storage unit 2_4 is replaced with a new power storage unit 2_4X. Note that each power storage unit 2 is shown in the form of an equivalent circuit of a power storage element group. Suppose that the power storage elements 4 included in the power storage units 2 have the same life characteristics. In addition, the difference is ignored in impedance of the power storage units 2 based on a difference in electrical distance from the electric power converter 20 to the power storage units 2 (e.g., the length of connection lines from the electric power converter 20 to the power storage units 2).

Capacitances C* and equivalent series resistances R* indicate the capacitances and the equivalent series resistances of the power storage units 2_1 to 2_3 (Specifically, the capacitances and equivalent series resistances of the power storage element groups of the power storage units 2_1 to 2_3). A capacitance C and an equivalent series resistance R indicate the capacitance and the equivalent series resistance of the power storage element group of the new power storage unit 2_4X.

The power storage element groups of the power storage units 2_1 to 2_3 mounted since the beginning of the operation are degraded, as compared to the power storage element group of the newly mounted power storage unit 2_4X. Therefore, the capacitances C* are less than the capacitance C (i.e., C* < C), and the equivalent series resistances R* are greater than the equivalent series resistance R (i.e., R* > R). "C* = k × C", where k is a degradation factor of capacitance (provided 0 < k < 1). "R* = l × R," where l is a degradation factor of the equivalent series resistance (provided that l > 1).

When the new power storage unit 2_4X and the other power storage units 2_1 to 2_3 have different characteristics as such, shunt currents flowing through the respective power storage units 2 vary. Specifically, a current I flowing through the new power storage unit 2_4X is greater than currents I* flowing through the power storage units 2_1 to 2_3. This may damage or affect the life of the power storage elements of the power storage unit 2_4X, due to the temperature increase of the power storage unit 2_4X.

### <Application of Correction Resistance>

In order to reduce the variations in shunt current flowing through the power storage units 2 (i.e., make the shunt currents as uniform as possible), a new power storage unit replaced with a fault power storage unit is provided with a correction resistance.

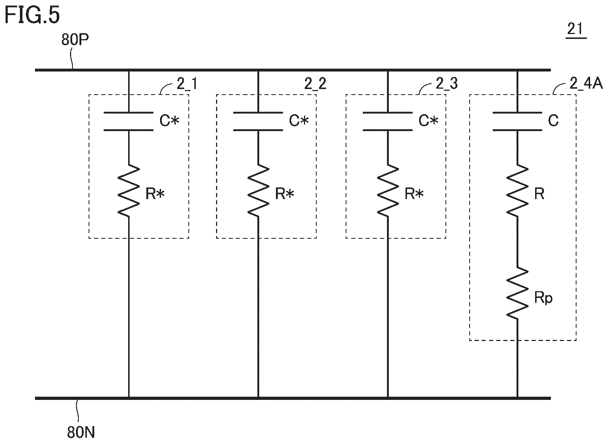

Fig. 5 is a diagram showing a configuration of the energy storage system 21 according to Embodiment 1. Fig. 5 is the same as Fig. 4, except that a correction resistance is introduced to the replaced new power storage unit 2_4A.

Specifically, in the power storage unit 2_4A, a correction resistance Rp is connected in series to the power storage element group. This renders the equivalent series resistance Rs of the power storage unit 2_4A the combined resistance of the equivalent series resistance R and the correction resistance Rp (i.e., Rs = R + Rp), which is greater than the equivalent series resistance R. Thus, the correction resistance Rp is set so that the combined resistance (i.e., the equivalent series resistance Rs) of the equivalent series resistance R and the correction resistance Rp of the power storage unit 2_4A is equal to the equivalent series resistance R* of each of the power storage units 2_1 to 2_3. Note that the equivalent series resistances R* may be estimated from the life characteristics of the power storage elements (e.g., the degradation characteristics depending on the age of the ESR) or measured when a fault storage unit is replaced with a new power storage unit.

Replacing the power storage units as described above can equalize the equivalent series resistances of the power storage units 2_1 to 2_3, and 2_4A, making the currents flowing through the respective power storage units 2 as uniform as possible. In other words, the power storage unit 2_4 is replaced with a new power storage unit 2_4A so that the difference in current flowing through the remaining power storage units 2_1 to 2_3 and the new power storage unit 2_4A is reduced. Moreover, since the energy storage system 21 does not have devices that automatically control the variable resistance and the resistance, the structure and size of the energy storage system 21 may be less affected.

In this case, as an action to be taken by the operator, the guidance information may include connecting the correction resistance Rp to a new power storage unit 2.

### <Variation 1: Application of Correction Capacitance>

As Variation 1 of Embodiment 1, a configuration is now described in which a correction capacitance is included in a new power storage unit replacing a fault power storage unit, to reduce the variations in shunt current flowing through the power storage units 2.

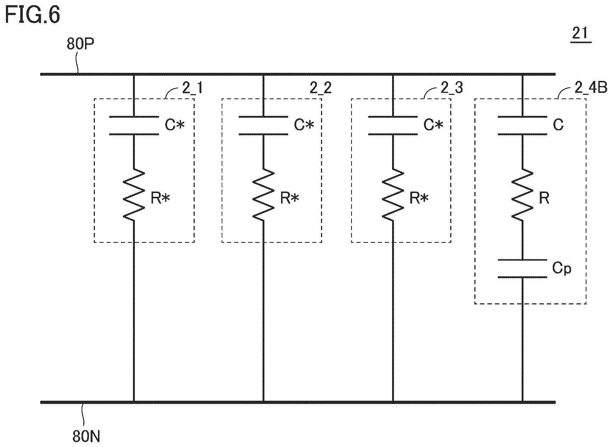

Fig. 6 is a diagram showing a configuration of an energy storage system 21 according to Variation 1 of Embodiment 1. Fig. 6 is the same as Figs. 5 and 4, except that a correction capacitance is introduced to a replacing new power storage unit 2_4B.

Specifically, in the power storage unit 2_4B, a correction capacitance Cp is connected in series to a power storage element group. This renders a capacitance Cs of the power storage unit 2_4B the combined capacitance of the capacitance C and the correction capacitance Cp (i.e., Cs = (C × Cp) / (C + Cp)), which is less than the capacitance C. Thus, the correction capacitance Cp is set so that the combined capacitance of the capacitance C and the correction capacitance Cp (i.e., the capacitance Cs) of the power storage unit 2_4B is equal to the capacitance C* of each of the power storage units 2_1 to 2_3. Note that the capacitances C* may be estimated from the life characteristics of the power storage elements (e.g., the degradation characteristics depending on the age), or measured when a fault power storage unit is replaced with a new power storage unit.

This equalizes the capacitances of the power storage units 2_1 to 2_3, and 2_4B, thereby making the currents flowing through the respective power storage units 2 as uniform as possible.

In this case, as an action to be taken by the operator, guidance information may include connecting the correction capacitance Cp to a new power storage unit 2.

### <Variation 2: Selection of Power Storage Units Having Same Characteristics>

In Variation 2, a configuration is now described in which a power storage unit having the same characteristics as the rest of the power storage units 2, other than a fault power storage unit, is selected as a new power storage unit replacing the fault power storage unit.

Specifically, a power storage unit 2 that has the same equivalent series resistance as the equivalent series resistances R* of the power storage units 2_1 to 2_3 is selected as a new power storage unit 2. Alternatively, a power storage unit 2 that has the same capacitance as the capacitances C* of the power storage units 2_1 to 2_3 is selected as a new power storage unit 2. Furthermore, a power storage unit 2 that has the same equivalent series resistance and the same capacitance as the equivalent series resistances R* and the capacitances C* of the power storage units 2_1 to 2_3 may be selected as a new power storage unit 2.

For example, a power storage unit 2 having the same characteristics as the aged power storage units 2_1 to 2_3 may be procured and applied as a new power storage unit 2, or a replacement power storage unit 2 may be secured at the beginning of the system operation and applied as a new power storage unit 2.

This equalizes the equivalent series resistances and the capacitances of the power storage units 2 after the power storage unit replacement, thereby making the currents flowing through the power storage units 2 as uniform as possible. Moreover, this obviates the need for newly inserting a correction resistance and a correction capacitance. Thus, cost reduction is expected.

### <Variation 3: Application of Negative Resistor>

As Variation 3 of Embodiment 1, a configuration is now described in which a fault power storage unit is replaced with a new power storage unit and the rest of the power storage units 2_1 to 2_3 are provided with negative resistors in order to reduce the variations in shunt current flowing through the power storage units 2.

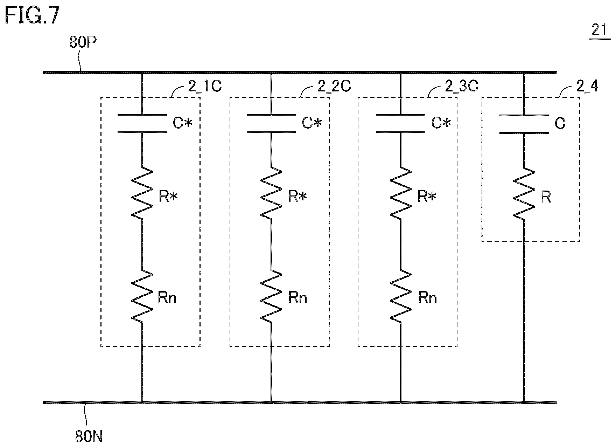

Fig. 7 is a diagram showing a configuration of the energy storage system 21 according to Variation 3 of Embodiment 1. Referring to Fig. 7, the fault power storage unit 2_4 is replaced with a new power storage unit 2_4. At the replacement, negative resistors Rn are newly introduced to the power storage units 2_1 to 2_3 too. For the sake of convenience, the power storage units 2_1 to 2_3 after the introduction of the negative resistors Rn are described as power storage units 2_1C to 2_3C. Here, the negative resistor has a resistance value of a negative polarity, and characteristics in which the greater the voltage applied across the resistor, the less current flows through the resistor. For example, an operational amplifier, a tunneling diode, etc. are used as the negative resistor.

In each of the power storage units 2_1C to 2_3C, a negative resistor Rn is connected in series to a power storage element group. This renders the equivalent series resistance Rs of each of the power storage units 2_1C to 2_3C the combined resistance of the equivalent series resistance R* and the negative resistor Rn (i.e., Rs = R* + Rn), which is less than the equivalent series resistance R*. Thus, the negative resistors Rn are set so that the combined resistance of the equivalent series resistances R* and the negative resistor Rn (i.e., the equivalent series resistance Rs) of the power storage units 2_1C to 2_3C are each equal to the equivalent series resistance R of the new power storage unit 2_4.

This equalizes the equivalent series resistances of the power storage units 2_1C to 2_3C, and 2_4, thereby making the currents flowing through the power storage units 2 as uniform as possible.

In this case, as an action to be taken by the operator, the guidance information may include connecting the negative resistors Rn to the remaining power storage units 2_1 to 2_3.

### Embodiment 2.

In the above-described Embodiment 1, the difference is ignored in impedance between the power storage units 2 based on the difference in electrical distance from the electric power converter 20 to the power storage units 2. In Embodiment 2, a configuration is described in which the difference in impedance is taken into account in replacing a fault power storage unit by a new power storage unit, and the new power storage unit is disposed electrically farthest away from a pair of input and output terminals 29.

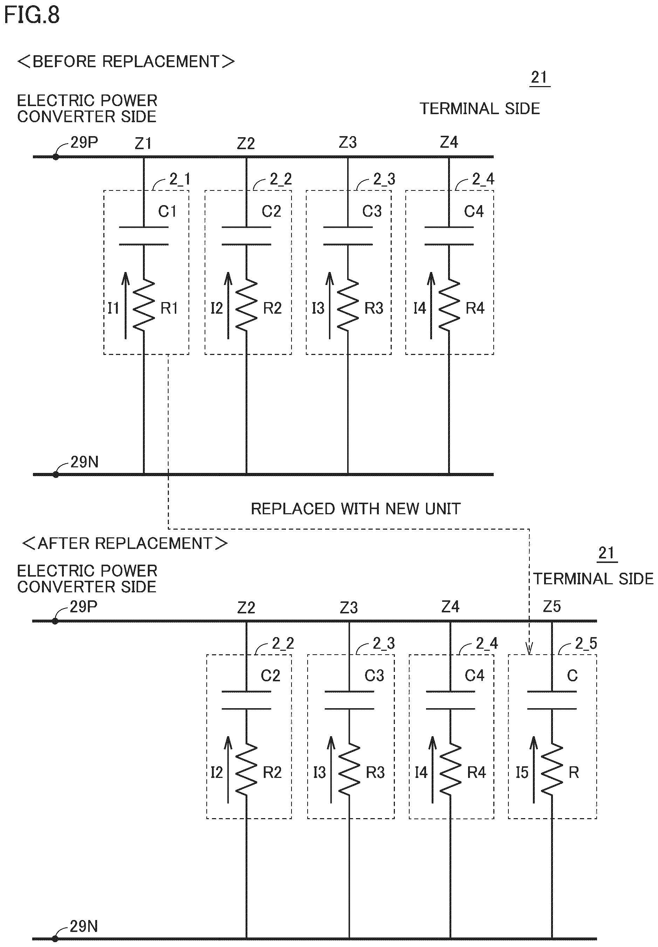

Fig. 8 is a diagram showing a configuration of an energy storage system 21 according to Embodiment 2. Here, assume that a power storage unit 2_1 is replaced with a power storage unit 2_5. Note that, at the beginning of the system operation, the power storage units 2 have the same characteristics. Specifically, at the beginning of the operation, each power storage unit 2 has an equivalent series resistance R and a capacitance C.

Referring to Fig. 8, a configuration of the power storage unit 2 before replacement is now described.

Multiple power storage units 2 are connected in parallel between a positive busbar 80P and a negative busbar 80N. The power storage unit 2_1 is disposed electrically closest to the pair of input and output terminals 29 (i.e., electrically closest to the electric power converter 20). A power storage unit 2_4 is disposed electrically farthest away from the pair of input and output terminals 29. For example, on the connection lines (e.g., the positive busbar 80P and the negative busbar 80N) connecting the pair of input and output terminals 29 and the respective power storage units 2, the electrical distance from the pair of input and output terminals 29 to the point of connection with the power storage unit 2_1 is the shortest distance, and the electrical distance from the pair of input and output terminals 29 to the point of connection with the power storage unit 2_4 is the longest distance. Therefore, Z1 < Z2 < Z3 < Z4 holds true, where Z1 to Z4 are impedances of the busbars from the electric power converter 20 to the power storage units 2_1 to 2_4, respectively. Therefore, the currents I1 to I4 flowing through the power storage units 2_1 to 2_4, respectively, differ, resulting in I1 > I2 > I3 > I4.

Since the greater the current flows through the power storage element, the sooner the power storage element deteriorates, the power storage unit 2_1 disposed electrically closest to the pair of input and output terminals 29 is the most susceptible to deterioration, and the power storage unit 2_4 disposed electrically closest to the pair of input and output terminals 29 is the least susceptible to deterioration. Therefore, R1 > R2 > R3 > R4 holds true for the equivalent series resistances, and C1 < C2 <C3 <C4 holds true for the capacitances.

Next, a configuration of the power storage units 2 after the replacement is described. The power storage unit 2_1 is replaced with the power storage unit 2_5. At this time, the power storage unit 2_5 is disposed electrically farthest away from the pair of input and output terminals 29. In other words, the power storage unit 2_5 is connected between the end of the positive busbar 80P that is electrically farthest away from the electric power converter 20 and the end of the negative busbar 80N that is electrically farthest away from the electric power converter 20. Here, the new power storage unit 2_5 has the equivalent series resistance R less than the equivalent series resistances R2 to R4. Note that the new power storage unit 2_5 has the capacitance C greater than the capacitances C2 to C4. In contrast, the busbar extending from the electric power converter 20 to the power storage unit 2_5 has the impedance Z5 greater than the impedances Z2 to Z4.

From the standpoint of equivalent series resistance, since the equivalent series resistance R is less than the equivalent series resistances R2 to R4, the current is more facilitated to flow through the power storage unit 2_5 than through the other power storage units 2_2 to 2_4. From the standpoint of impedance, in contrast, since the impedance Z5 is greater than the impedances Z2 to Z4, the current is more impeded from flowing through the power storage unit 2_5 than through the other power storage units 2_2 to 2_4. Therefore, arranging the new power storage unit 2_5 electrically farthest away from the pair of input and output terminals 29 can make the currents flowing through the power storage units 2_2 to 2_5 as uniform as possible.

### Embodiment 3.

In Embodiment 3, a configuration will be described in which correction resistances are provided in respective power storage units 2 at the beginning of the operation, as a function of a difference in impedance from the electric power converter 20 to the power storage units 2, in order to reduce variations in shunt current flowing through the power storage units 2.

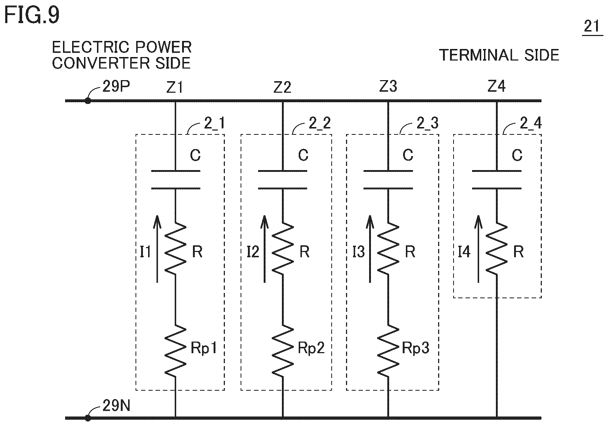

Fig. 9 is a diagram showing a configuration of an energy storage system 21 according to Embodiment 3. Referring to Fig. 9, at the beginning of the operation, the power storage units 2 have the same characteristics. Therefore, each power storage unit 2 has an equivalent series resistance R and a capacitance C.

Z1 < Z2 < Z3 < Z4 holds true for impedances Z1 to Z4 from the electric power converter 20 to power storage units 2_1 to 2_4. This difference in impedance is taken into account in providing the power storage units 2_1 to 2_3 with correction resistances Rp1 to Rp3, respectively.

Specifically, the correction resistance Rp1 is connected in series to a power storage element group of the power storage unit 2_1, the correction resistance Rp2 is connected in series to a power storage element group of the power storage unit 2_2, and the correction resistance Rp3 is connected in series to a power storage element group of the power storage unit 2_3. Rp1 > Rp2 > R3 holds true for the correction resistances Rp1 to Rp3. In other words, the correction resistance (e.g., the correction resistance Rp1) of the power storage unit 2 disposed electrically closest to the electric power converter 20 is greater than the correction resistance (e.g., the correction resistance Rp3) of the power storage unit 2 disposed electrically farthest away from the electric power converter 20.

Due to this, the power storage unit 2_1 disposed electrically closest to the electric power converter 20 has the greatest equivalent series resistance (i.e., "R + Rp1"), and the power storage unit 2_4 disposed electrically farthest away from the electric power converter 20 has the least equivalent series resistance (i.e., R). More specifically, the impedances Z1 to Z4 are taken into account in setting the resistance values of the correction resistances Rp1 to Rp3 so that the currents flowing through the power storage units 2 are uniform.

Due to this, from the standpoint of equivalent series resistance, the current flows least easily through the power storage unit 2_1, and the current flows most easily through the power storage unit 2_4. From the standpoint of impedance, in contrast, the current flows most easily through the power storage unit 2_1, and the current flows least easily through the power storage unit 2_4. Therefore, the currents I1 to I4 flowing through the power storage units 2_1 to 2_4 can be as uniform as possible. Note that since the variations in the currents I1 to I4 are reduced, characteristic differences between the power storage units 2 due to aging can be mitigated.

Note that the power storage unit 2_4 may include a correction resistance (e.g., a correction resistance Rp4) too. In this case, again, the resistance values of the correction resistances Rp1 to Rp4 are set so that the currents flowing through the power storage units 2 are uniform. The configuration where the correction resistance Rp4 has a resistance value of "0" corresponds to the configuration of Fig. 9.

### Embodiment 4.

In Embodiment 4, a configuration will be described in which the impedances from an electric power converter 20 to respective power storage units 2 are made the same in order to reduce the variations in shunt current flowing through the power storage units 2.

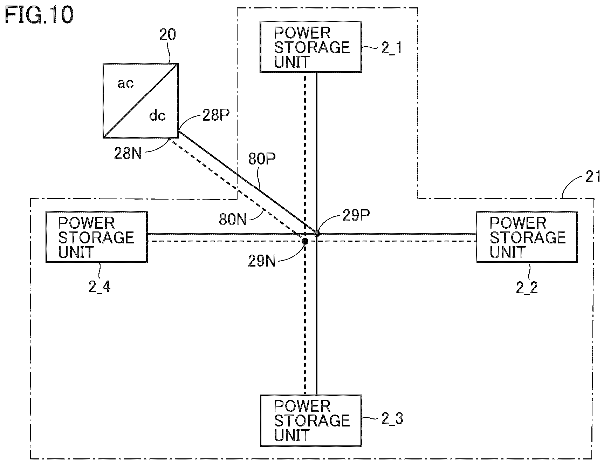

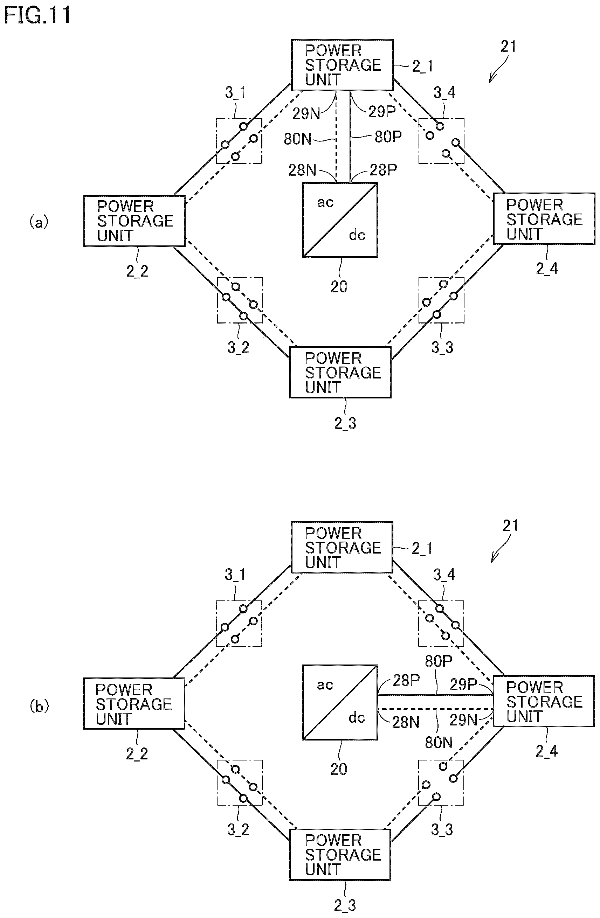

Fig. 10 is a diagram showing a configuration of an energy storage system 21 according to Embodiment 4. In Fig. 10, the respective power storage units 2 are illustrated in blocks, which are connected between a positive busbar 80P and a negative busbar 80N as shown in Fig. 3 described above. This approach is similar for the following Fig. 11.

Referring to Fig. 10, the electrical distances from a pair of input and output terminals 29 to power storage units 2_1 to 2_4 are set to be equal. In other words, the power storage units 2_1 to 2_4 are disposed at an equal electrical distance from the electric power converter 20. Accordingly, impedances Z1 to Z4 of the busbars from the electric power converter 20 to the power storage units 2_1 to 2_4 are equal. Moreover, the equivalent series resistances of the power storage units 2_1 to 2_4 are equal and the capacitances of the power storage units 2_1 to 2_4 are equal. Therefore, currents I1 to I4 respectively flowing through the power storage units 2_1 to 2_4 can be made uniform. Since the variations between the currents I1 to I4 are reduced, characteristic differences between the power storage units 2 due to aging can be mitigated.

### Embodiment 5.

In Embodiment 5, a configuration will be described in which a variation in shunt current flowing through respective power storage units 2 are reduced from a long-term perspective.

Fig. 11 is a diagram showing a configuration of an energy storage system 21 according to Embodiment 5. Part (a) of Fig. 11 shows a configuration of the energy storage system 21 according to a certain aspect, and (b) of Fig. 11 shows a configuration of the energy storage system 21 according to another aspect.

Here, assume that at the beginning of the operation, equivalent series resistances R1 to R4 of power storage units 2_1 to 2_4 are equal, and capacitances C1 to C4 of the power storage units 2_1 to 2_4 are equal.

Referring to (a) of Fig. 11, the energy storage system 21 includes the power storage units 2_1 to 2_4 connected in parallel and switches 3_1 to 3_4.

The switch 3_1 is disposed between the power storage unit 2_1 and the power storage unit 2_2. Specifically, the switch 3_1 is disposed on the connection lines (i.e., part of the positive busbar 80P and negative busbar 80N) for connecting, in parallel, the power storage unit 2_1 and the power storage unit 2_2 adjacent to the power storage unit 2_1. Similarly, the switch 3_2 is disposed between the power storage unit 2_2 and the power storage unit 2_3, the switch 3_3 is disposed between the power storage unit 2_3 and the power storage unit 2_4, and the switch 3_4 is disposed between the power storage unit 2_4 and the power storage unit 2_1.

In the example of (a) of Fig. 11, the electric power converter 20 and the power storage unit 2_1 are directly connected together. The switch 3_4 is open, and the other switches 3_1 to 3_3 are closed. This has the power storage unit 2_1 arranged electrically closest to the electric power converter 20, and the power storage unit 2_4 arranged electrically farthest away from the electric power converter 20. Therefore, Z1 < Z2 < Z3 < Z4 holds true for impedances Z1 to Z4 from the electric power converter 20 to the power storage units 2_1 to 2_4.

Therefore, as the energy storage system 21 starts the operation in the state illustrated in (a) of Fig. 11 and a period of time elapses, the power storage elements deteriorate with variations in current flowing through the respective power storage units 2, resulting in R1 > R2 > R3 > R4 for the equivalent series resistances R1 to R4 and C1 < C2 < C3 < C4 for the capacitances. If the operation continues with such a condition, the difference between the equivalent series resistances R1 to R4 increases, and the difference between the capacitances C1 to C4 increases too. While depending on the difference between the impedances Z1 to Z4, the variations in current flowing through the respective power storage units 2, typically, increase. Thus, the configuration of the energy storage system 21 is changed from the state of (a) of Fig. 11 to the state of (b) of Fig. 11.

In the example of (b) of Fig. 11, the electric power converter 20 and the power storage unit 2_4 are directly connected together. Specifically, the power storage unit that is directly connected to the electric power converter 20 is changed from the power storage unit 2_1 to the power storage unit 2_4. Moreover, the switch 3_3 is open and the other switches 3_1, 3_2, and 3_4 are closed. Specifically, the open or closed state of the switch 3_3 is changed from "closed" to "open," and the open or closed state of the switch 3_4 is changed from "open" to "closed."

This has the power storage unit 2_4 arranged electrically closest to the electric power converter 20 and the power storage unit 2_3 arranged electrically farthest away from the electric power converter 20. Therefore, Z4 < Z1 < Z2 < Z3 holds true. The states of (a) and (b) of Fig. 11 are by way of example. The power storage unit 2 that is directly connected to the electric power converter 20 can be arbitrarily selected. The open or closed states of the switches 3_1 to 3_4 can be arbitrarily selected too.

Accordingly, the energy storage system 21 according to Embodiment 5 can change the open or closed states of the switches 3_1 to 3_4 and the power storage unit 2 that is directly connected to the electric power converter 20, thereby adjusting the electrical distances between the electric power converter 20 and the power storage units 2. This suggests that the impedances Z1 to Z4 are adjustable.

Accordingly, the currents flowing through the power storage units 2 can be made as uniform as possible from a long-term perspective. Characteristic differences between the power storage units 2 due to aging can also be mitigated.

### Other Embodiments.

The configurations exemplified as the above-described embodiments are one example configuration of the present disclosure, and can be combined with other known technique, or can be modified, such as part of the configuration being omitted, without departing from the gist of the present disclosure. Moreover, in the above-described embodiments, the processes and configurations described in the other embodiments may be appropriately adapted and implemented.

The presently disclosed embodiments should be considered in all aspects as illustrative and not restrictive. The scope of the present disclosure is indicated by the appended claims, rather than by the description above, and all changes that come within the scope of the claims and the meaning and range of equivalency of the claims are intended to be embraced within their scope.

### REFERENCE SIGNS LIST

2 power storage unit; 3 switch; 4 power storage element; 10 electric power control system; 15 AC power system; 17 point of interconnection; 20 electric power converter; 21 energy storage system; 23 transformer; 28N negative-side DC terminal; 28P positive-side DC terminal; 29 pair of input and output terminals; 29N negative terminal; 29P positive terminal; 30 monitoring control device; 80N negative busbar; 80P positive busbar; and 200 user interface screen.

## Claims

1. An energy storage system connected to an alternating-current power system via an electric power converter, the energy storage system being configured to receive and store a direct-current power as an energy and output the energy as a direct-current power, the energy storage system comprising:
a pair of input and output terminals connected to the electric power converter; and
a plurality of power storage units which are connected in parallel between one of the pair of input and output terminals and the other one of the pair of input and output terminals, wherein
each of the plurality of power storage units includes a power storage element group consisting of a plurality of power storage elements, and
among the plurality of power storage units, when one power storage unit is replaced with a new power storage unit, the one power storage unit is replaced with the new power storage unit so that a difference in current flowing through the new power storage unit and remaining power storage units, excluding the one power storage unit, is reduced.

2. The energy storage system according to claim 1, wherein
the new power storage unit includes a power storage element group and a correction resistance connected in series to the power storage element group, and
a combined resistance of an equivalent series resistance of the power storage element group of the new power storage unit and the correction resistance is equal to an equivalent series resistance of the power storage element group of each of the remaining power storage units.

3. The energy storage system according to claim 1, wherein
the new power storage unit includes a power storage element group and a correction capacitance connected in series to the power storage element group, and
a combined capacitance of a capacitance of the power storage element group of the new power storage unit and the correction capacitance is equal to a capacitance of the power storage element group of each of the remaining power storage units.

4. The energy storage system according to claim 1, wherein
an equivalent series resistance of the power storage element group included in the new power storage unit is equal to an equivalent series resistance of the power storage element group of each of the remaining power storage units.

5. The energy storage system according to claim 1 or 4, wherein
a capacitance of the power storage element group included in the new power storage unit is equal to a capacitance of the power storage element group of each of the remaining power storage units.

6. The energy storage system according to claim 1, wherein
among the plurality of power storage units, when one power storage unit is replaced with a new power storage unit, a negative resistor is connected in series to the power storage element group of each of the remaining power storage units, and
a combined resistance of an equivalent series resistance of the power storage element group of each of the remaining power storage units and the negative resistor is equal to an equivalent series resistance of the power storage element group of the new power storage unit.

7. The energy storage system according to any one of claims 1 to 3, wherein
the plurality of power storage units are connected in parallel between a first busbar connected to the one of the pair of input and output terminals and a second busbar connected to the other one of the pair of input and output terminals, and
the new power storage unit is connected between an end of the first busbar electrically farthest away from the electric power converter and an end of the second busbar electrically farthest away from the electric power converter.

8. An electric power control system, comprising:
the energy storage system according to any one of claims 1 to 7; and
a monitoring control device to monitor states of the plurality of power storage units, wherein
when the one power storage unit is malfunctioning, the monitoring control device shows guidance information for replacement of the one power storage unit with the new power storage unit.

9. An energy storage system connected to an alternating-current power system via an electric power converter, the energy storage system being configured to receive and store a direct-current power as an energy and output the energy as a direct-current power, the energy storage system comprising:
a pair of input and output terminals connected to the electric power converter; and
a plurality of power storage units which are connected in parallel between one of the pair of input and output terminals and the other one of the pair of input and output terminals, wherein
each of the plurality of power storage units includes a power storage element group consisting of a plurality of power storage elements and a correction resistance connected to the power storage element group, and
resistance values of a plurality of correction resistances respectively included in the plurality of power storage units are set so that currents flowing through the plurality of power storage units are uniform.

10. The energy storage system according to claim 9, wherein
the plurality of power storage units are connected in parallel between a first busbar connected to the one of the pair of input and output terminals and a second busbar connected to the other one of the pair of input and output terminals,
a first power storage unit, among the plurality of power storage units, is disposed electrically closer to the electric power converter than a second power storage unit among the plurality of power storage units, and
the first power storage unit has a first correction resistance greater than a correction resistance of the second power storage unit.

11. An energy storage system connected to an alternating-current power system via an electric power converter, the energy storage system being configured to receive and store a direct-current power as an energy and output the energy as a direct-current power, the energy storage system comprising:
a pair of input and output terminals connected to the electric power converter; and
a plurality of power storage units which are connected in parallel between one of the pair of input and output terminals and the other one of the pair of input and output terminals, wherein
the plurality of power storage units are disposed at an equal electrical distance from the electric power converter.

12. An energy storage system connected to an alternating-current power system via an electric power converter, the energy storage system being configured to receive and store a direct-current power as an energy and output the energy as a direct-current power, the energy storage system comprising:
a pair of input and output terminals connected to the electric power converter;
a plurality of power storage units which are connected in parallel between one of the pair of input and output terminals and the other one of the pair of input and output terminals; and
switches for the plurality of power storage units, the switches each being disposed on a connection line for connecting, in parallel, a power storage unit and a power storage unit adjacent to the power storage unit, among the plurality of power storage units, wherein
the energy storage system is capable of adjusting an electrical distance from the electric power converter to each of the plurality of power storage units by changing open or closed states of the switches and the power storage unit that is directly connected to the electric power converter.
